(19) Europäisches Patentamt
European Patent Office
Office européen des brevets

(11) **EP 4 384 341 B1**

(12) **EUROPÄISCHE PATENTSCHRIFT**

(45) Veröffentlichungstag und Bekanntmachung des Hinweises auf die Patenterteilung:
**22.10.2025 Patentblatt 2025/43**

(21) Anmeldenummer: **21759064.5**

(22) Anmeldetag: **10.08.2021**

(51) Internationale Patentklassifikation (IPC):
**B23K 11/30** *(2006.01)* **F15B 15/14** *(2006.01)*
**F15B 15/20** *(2006.01)* **F15B 15/22** *(2006.01)*

(52) Gemeinsame Patentklassifikation (CPC):
**F15B 15/1476; B23K 11/3072; F15B 15/204;**
**F15B 15/226;** F15B 15/1428; F15B 15/1457;
F15B 2211/7053; F15B 2211/76; F15B 2211/8855

(86) Internationale Anmeldenummer:
**PCT/EP2021/072258**

(87) Internationale Veröffentlichungsnummer:
**WO 2023/016631 (16.02.2023 Gazette 2023/07)**

(54) **KAPPENWECHSELSYSTEM ZUM ABZIEHEN VON ELEKTRODENKAPPEN VON SCHWEISSELEKTRODENSCHÄFTEN**

CAP CHANGING SYSTEM FOR REMOVING ELECTRODE CAPS FROM WELDING ELECTRODE SHAFTS

SYSTEME DE CHANGEMENT DE FÛTS POUR RETIRER LES FÛTS DES ALLONGES DES ELECTRODES DE SOUDAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**MA**

(43) Veröffentlichungstag der Anmeldung:
**19.06.2024 Patentblatt 2024/25**

(73) Patentinhaber: **Bräuer Systemtechnik GmbH 09456 Annaberg-Buchholz (DE)**

(72) Erfinder: **NITZ, Jens 09465 Sehmatal-Sehma (DE)**

(74) Vertreter: **Weidner Stern Jeschke Patentanwälte Partnerschaft mbB Wilhelm-Herbst-Straße 5 28359 Bremen (DE)**

(56) Entgegenhaltungen:
EP-A2- 0 667 206     CN-A- 108 708 886
DE-A1- 10 149 540     US-A1- 2013 186 080

**Beschreibung**

Die Erfindung betrifft ein Kappenwechselsystem zum Abziehen von Elektrodenkappen von Schweißelektrodenschäften aus einem Werkzeugträger mit einem doppelt wirkenden Linearantrieb, welcher für Kappenwechselsysteme entwickelt wurde.

Solche Kappenwechselsysteme beinhalten u.A. Einrichtungen zum Abziehen von Elektrodenkappen von Schweißelektrodenschäften, insbesondere für Schweißzangen in automatisierten Anlagen.

Dazu werden die Kappenwechselsysteme so angeordnet, dass die Schweißroboter die ihnen zugeordneten Schweißzangen mit dem Kappenwechselsystem erreichen können und die Elektrodenkappen in Eingriff mit dem jeweils installierten Kappenwechselsystem gebracht werden.

Diese Kappenwechselsysteme werden regelmäßig gebildet aus einem Werkzeugträger mit mindestens einem darin um eine Werkzeugdrehachse drehbar gelagerten Wechselkopfwerkzeug und einem Antrieb für dieses Wechselkopfwerkzeug.

Bedingt durch den Einsatz solcher Einrichtungen bestehen komplexe Anforderungen an eine möglichst geringe Baugröße und Masse der Linearantriebe für solche Einrichtungen.

Der Einsatz von Linearantrieben (mechanisch/pneumatisch/hydraulisch) ist gemäß dem Stand der Technik hinreichend bekannt.

Gleiches gilt für die Kombination aus Linearantrieb und Feder für einseitig beaufschlagte Systeme, um eine vordefinierte Position zu erreichen oder in Form von Dämpfungssystemen.

Beispielsweise in Pneumatik wie Hydraulik ist die maximal erzielbare Kraft an der Kolbenstange abhängig vom Durchmesser der beaufschlagbaren Kolbenfläche und dem verfügbaren Mediendruck.

Technische Anwendungen in der Praxis erfordern häufig einseitig eine höhere Kraft an der Kolbenstange. Durch die Wahl des Setups, ob Kolbenboden- oder Kolbenstangenseitig montiert, wird diesbezüglich eine technisch eingeschränkte Optimierung erzielt.

Eine weitere Steigerung der an der Kolbenstange wirkenden Kraft ist lediglich durch eine Anpassung der Dimensionierung (Kolbendurchmesser und damit der Baugröße des Linearantriebs) oder durch einen höheren Systemdruck in der Versorgungseinheit möglich.

Aus der DE 198 25 770 C2 ist eine Vorrichtung zum Aufsetzen von Elektrodenkappen bekannt bei welcher eine Aufschiebeeinrichtung auf der der Abgabeöffnung gegenüberliegenden Seite des Elektrodenkappenmagazins angeordnet ist und aus einer Zylinderkolbeneinheit, die pneumatisch oder hydraulisch angetrieben wird, besteht. Eine Variante dieser Lösung stellt mittels Federkraft lediglich den Kolben zurück.

Nachteilig bei den aus dem Stand der Technik bekannten Lösungen ist, dass eine größere Kraft nur durch eine Vergrößerung des Kolbendurchmessers und damit der Baugröße des Linearantriebs oder durch einen höheren Systemdruck in der Versorgungseinheit möglich ist.

Aufgabe der Erfindung ist es, eine Lösung vorzuschlagen, welche es ermöglicht eine größere Kraftwirkung bei nahezu gleicher Baugröße des Linearantriebs zu realisieren.

Gemäß Anspruch 1 wird diese Aufgabe dadurch gelöst, dass ein Kappenwechselsystem eine Kombination von Linearantrieb (pneumatisch/hydraulisch) mit einer Feder zum Zweck einer über die reine Linearantrieb-Nennkraft hinausgehenden einseitigen Kraftverstärkung aufweist.

Dabei wird erfindungsgemäß durch die Kombination aus extern positioniertem Federsystem mit einem doppeltwirkenden (in beide Richtungen) Linearantrieb einseitig eine Kraftverstärkung ohne Änderung der Linearantriebdimensionierung oder des Systemdrucks in der Versorgungseinheit benutzerspezifisch über die Nennkraft des Linearantriebs realisiert.

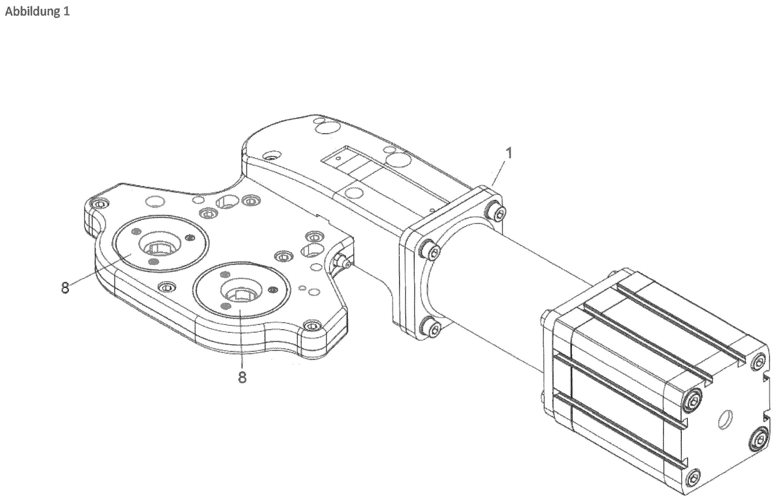

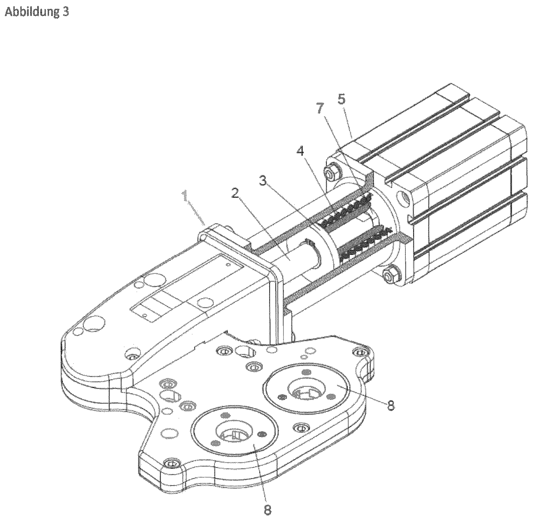

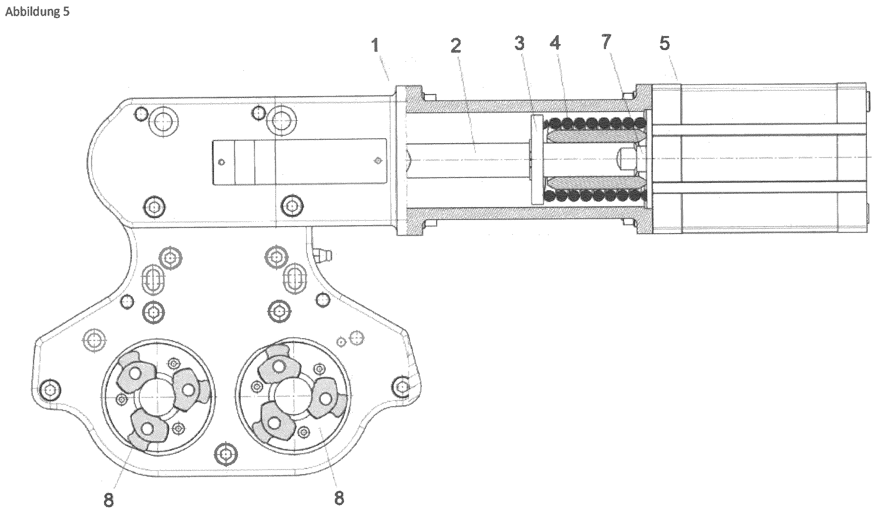

Nachfolgend soll die erfindungsgemäße Lösung als Ausführungsbeispiel anhand eines Kappenwechslers sowie anhand der Abbildungen 1 bis 5 näher erläutert werden.

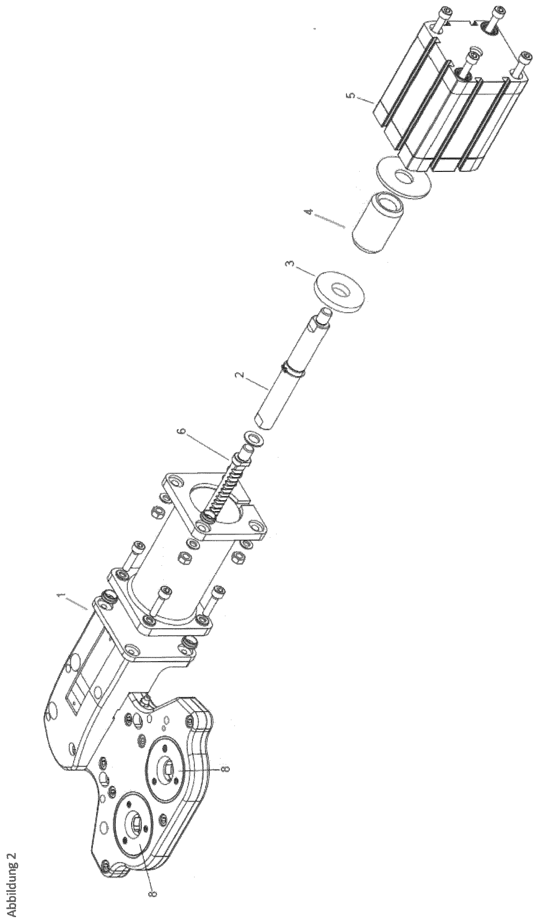

Dabei zeigt Abbildung 1 solch einen beispielhaften pneumatischen Kappenwechsler, Abbildung 2 zeigt einen pneumatischen Kappenwechsler in Explosionsdarstellung des Teils federunterstützter Linearantrieb,

Abbildung 3 zeigt einen pneumatischen Kappenwechsler in Schnittdarstellung mit Blick auf den federunterstützten Linearantrieb,
Abbildung 4 zeigt einen pneumatischen Kappenwechsler mit einem Federspeicher in entladenem Zustand in Ruheposition und
Abbildung 5 zeigt einen pneumatischen Kappenwechsler mit einem Federspeicher in geladenem Zustand und offenen Wechselkopfwerkzeugen.

Alternativ zum Erfindungsgedanken ist die Verwendung der Lösungen eines federunterstützen Linearantriebs 5 auch bei jeder anderen Anwendung möglich.

Gemäß Erfindungsgedanken wird die mit einer Zahnstange 6 als Kraftübertragungselement verbundene Kolbenstange 7 des Linearantriebs 5 mit einer Kolbenstangenverlängerung 2 ausgestattet, welche so dimensioniert ist, dass sie die zusätzliche Feder 4 und deren entsprechenden Federweg aufnimmt.

Die Feder 4 stützt sich dabei mit ihrem einen Ende auf den Linearantrieb 5, mit ihrem anderen Ende auf einer Aufnahmescheibe 3 ab, welche fest mit der Kolbenstangenverlängerung 2 verbunden ist.

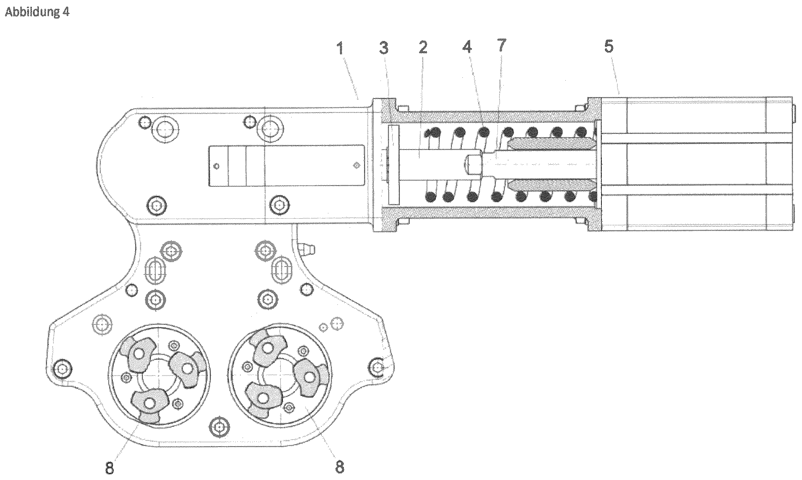

Abbildung 4 zeigt die Ausgangsposition des pneumatischen Kappenwechslers in Ruheposition.

Ein Pneumatikzylinder als Linearantrieb 5 befindet sich in seiner ausgefahrenen Endposition, die unterstützende Feder 4 ist entspannt und die Wechselkopfwerkzeuge 8 sind geschlossen.

Um einen Kappenwechselprozess zu starten, sind die Wechselkopfwerkzeuge 8 zu öffnen. Dies geschieht, in dem der Pneumatikzylinder als Linearantrieb 5 kolbenstangenseitig 7 mit Druckluft beaufschlagt wird. Über eine innenliegende Zahnstange 6 und verbundenen Zahnräder werden die Wechselkopfwerkzeuge 8 geöffnet. Die mit der Kolbenstangenverlängerung 2 an definierter Position verbundene Aufnahmescheibe 3 bewirken das Spannen der Feder 4.

Die mit dem Pneumatikzylinder als Linearantrieb 5 kolbenstangenseitig erzeugte Kraft muss größer der Feder-Nennkraft sein, um diese vollständig spannen zu können.

Die Dimensionierung des federunterstützten Linearantriebs ist abhängig von der erforderlichen Kraft am Wirkwerkzeug, in diesem Anwendungsbeispiel vom erforderlichen Drehmoment am Wechselkopfwerkzeug, um eine Elektrodenkappe vom Konus der Schweißzange lösen zu können.

Die erforderliche Systemkraft [FSystem], die an der Zahnstange 6 des pneumatischen Kappenwechslers anliegen muss, um über das Stirnradgetriebe das erforderliche Drehmoment an den Wechselkopfwerkzeugen 8 erzeugen zu können, berechnet sich vereinfacht wie folgt:

$$\mathrm{FSystem\ (s) = FZylinder + FFeder\ (s).}$$

Die Dimensionierung des Pneumatikzylinders als Linearantrieb 5 erfolgt üblicherweise in Abhängigkeit des verfügbaren Luftdrucks, Kolbendurchmesser und erforderlichen Hublänge.

Zu berücksichtigen ist, dass die Unterstützung durch die Federkraft vom Spannweg (s) der Federvorspannung linear entsprechend ihrer Federkonstante abhängt. Im ungespannten Zustand der Feder L0 (s = 0 mm) ist die Unterstützung gleich 0.

$$\mathrm{FFeder\ (sL0) = 0,\ FSystem\ (sL0) = FZylinder + 0.}$$

Im maximal zulässig gespannten Zustand der Feder bei Ln (kleinste Länge der Feder) bzw. bei größtem Spannweg sn ist die Unterstützung durch die Feder 4 maximal.

$$\mathrm{FFeder\ (sn) = maximal,\ FSystem\ (sn) = FZylinder + FFeder\ (sn) = maximal.}$$

Mit geöffneten Wechselkopfwerkzeugen 8 wird der pneumatische Kappenwechsler über die zu lösende Kappe positioniert, so dass diese koaxial im Wechselkopfwerkzeug 8 steht.

Mit Druckluftbeaufschlagung der Kolbenseite des Pneumatikzylinders als Linearantrieb 5 startet die Linearbewegung an der Zahnstange mit maximaler Systemkraft

$$\mathrm{(FSystem(sn) = FZylinder + FFeder(sn) = maximal).}$$

Die gespannte Feder 4 drückt gegen die Aufnahmescheibe 3, die über ihre Fixierung mit der Kolbenstangenverlängerung 2 die gespeicherte Kraft der Feder 4 zusätzlich zur Kraft des Pneumatikzylinders als Linearantrieb 5 in die Zahnstange einleitet. Die Wechselkopfwerkzeuge schließen und greifen die zu lösende Kappe. Neben der Federkraft unterstützt der erhöhte Masseimpuls beim Auftreffen des Wechselkopfwerkzeugs 8 während des Schließens gegen die noch fest auf dem Konus sitzende Kappe den Löseeffekt.

Die tatsächlich wirkende Systemkraft an der Zahnstange 6/Drehmoment am Wechselkopfwerkzeug 8 ist linear von der Länge des Spannweges (s) der Federvorspannung abhängig.

Im konkreten Anwendungsbeispiel wurde eine Steigerung der Systemkraft um 78%, bezogen auf die Nennkraft eines Pneumatikzylinders mit einem Kolbendurchmesser von 63 mm als Linearantrieb, bei einem Systemdruck p = 6 bar und einem maximalen Spannweg der Feder sn = 49,31 mm ermittelt.

$$\mathrm{FFeder\ (sn = 49{,}31\ mm) = 1454{,}42\ N}$$

$$\mathrm{FZylinder = 1870\ N}$$

$$FSystem\ (sn = 49{,}31\ mm) = 3324{,}42\ N$$

Beim Auftreffen des Wechselkopfwerkzeugs 8 auf die zu lösende Kappe bei s = 42 mm konnte eine Steigerung der Systemkraft um 59% bezogen auf die Nennkraft des Pneumatikzylinders als Linearantrieb 5 bei p = 6 bar ermittelt werden.

$$FFeder\ (s=42mm) = 1110{,}648\ N$$

$$FZylinder = 1870\ N$$

$$FSystem\ (s=42mm) = 2980{,}648\ N$$

Als Feder zu betrachten sind alle bekannten Systeme, die äquivalente Wirkungen mit gleicher Unterstützung eines Linearantriebs realisieren.

## Patentansprüche

1. nspruch 1: Kappenwechselsystem zum Abziehen von Elektrodenkappen von Schweißelektrodenschäften aus einem Werkzeugträger mit mindestens einem darin um eine Werkzeugdrehachse drehbar gelagerten Wechselkopfwerkzeug, **gekennzeichnet durch** einen doppeltwirkenden Linearantrieb für dieses Wechselkopfwerkzeug, bei welchem die Kolbenstange (7) des Linearantriebs (5) mit einer Kolbenstangenverlängerung (2) ausgestattet und so dimensioniert ist, dass diese eine Feder (4) und deren entsprechenden Federweg aufnimmt, wobei sich die Feder (4) mit ihrem einen Ende auf den Linearantrieb (5) und mit ihrem anderen Ende auf einer Aufnahmescheibe (3) abstützt, welche fest mit der Kolbenstangenverlängerung (2) verbunden ist, wobei sich die Feder (4) bei kolbenstangenseitiger (7) Druckbeaufschlagung durch Verschiebung der Kolbenstangenverlängerung (2) spannt und bei Druckbeaufschlagung der Kolbenseite des Linearantriebs (5) die Linearbewegung an einem Kraftübertragungselement (6) mit maximaler Systemkraft auszulösen ist, wobei die gespannte Feder (4) gegen die Aufnahmescheibe (3) drückt, die über ihre Fixierung mit der Kolbenstangenverlängerung (2) die gespeicherte Kraft der Feder (4) zusätzlich zur Kraft des Linearantriebs (5) in das Kraftübertragungselement (6) einleitet.

## Claims

1. Cap exchanging system for removing electrode caps from welding electrode shafts from a tool support having at least one changing head tool rotatably mounted therein about a tool rotational axis, **characterized by** a double-acting linear drive for this changing head tool, in which the piston rod (7) of the linear drive (5) is equipped with a piston rod extension (2) and dimensioned in such a way that it accommodates a spring (4) and the respective spring travel thereof, wherein one end of the spring (4) is supported on the linear drive (5) and the other end is supported on an accommodation disc (3) fixedly connected with the piston rod extension (2), wherein the spring (4) is loaded upon application of pressure from the side of the piston rod (7) by displacement of the piston rod extension (2), and the linear movement is to be triggered with maximum system force on a force transmission element (6) upon pressure application on the piston side of the linear drive (5), wherein the loaded spring (4) presses against the accommodation disc (3), which introduces the accumulated force of the spring (4) into the force transmission element (6) in addition to the force of the linear drive (5).

## Revendications

1. Système de changement de coiffe destiné à retirer des coiffes d'électrode de tiges d'électrode de soudage d'un porte-outil avec au moins un outil de tête à changer monté de manière à pouvoir tourner autour d'un axe de rotation d'outil, **caractérisé par** un entraînement linéaire à double action pour ledit outil de tête à changer, pour lequel la tige de piston (7) de l'entraînement linéaire (5) est équipée d'un prolongement (2) de tige de piston et est dimensionnée de telle sorte que celle-ci reçoit un ressort (4) et son débattement élastique correspondant, dans lequel le ressort (4) prend appui par une extrémité sur l'entraînement linéaire (5) et par son autre extrémité sur un disque de réception (3), qui est relié de manière solidaire au prolongement (2) de tige de piston, dans lequel le ressort (4) se tend du fait du coulissement du prolongement (2) de tige de piston lors de l'application d'une pression du côté de la tige de piston (7) et, lors d'une application de pression sur le côté de piston de l'entraînement linéaire (5), le déplacement linéaire est à déclencher sur un élément de transmission de force (6) avec une force de système maximale, dans lequel le ressort (4) tendu exerce une pression contre le disque de réception (3), qui applique dans l'élément de transmission de force (6) la force accumulée du ressort (4) en plus de la force de l'entraînement linéaire (5) par sa fixation avec le prolongement (2) de tige de piston.

Abbildung 1

EP 4 384 341 B1

Abbildung 2

7

Abbildung 3

Abbildung 4

Abbildung 5

EP 4 384 341 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19825770 C2